# EUROPÄISCHE PATENTSCHRIFT

(11) **EP 3 137 758 B1**
(45) Veröffentlichungstag und Bekanntmachung des Hinweises auf die Patenterteilung: **02.08.2017**
(21) Anmeldenummer: 15732514.3
(22) Anmeldetag: 29.04.2015
(51) Int. Cl.: F02D 41/12, F02D 41/40, F02B 37/12, F02D 41/00, F02D 41/02, F02D 15/00

(54) **VERFAHREN ZUM BETRIEB EINER BRENNKRAFTMASCHINE**
METHOD FOR OPERATING AN INTERNAL COMBUSTION ENGINE
PROCÉDÉ POUR FAIRE FONCTIONNER UN MOTEUR À COMBUSTION INTERNE

(30) Priorität: 29.04.2014 DE 102014006471
(43) Veröffentlichungstag der Anmeldung: 08.03.2017
(73) Patentinhaber: IAV GmbH Ingenieurgesellschaft Auto und Verkehr, 10587 Berlin (DE)
(72) Erfinder: LAUBENDER, Jochen, 85051 Ingolstadt (DE); MAGNOR, Olaf, 38574 Ribbesbüttel (DE); GOTTSCHALK, Wolfram, 39112 Magdeburg (DE)
(74) Vertreter: Fukala, Georg
(86) Internationale Anmeldenummer: PCT/DE2015/000215
(87) Internationale Veröffentlichungsnummer: WO 2015/165440

(56) Entgegenhaltungen:
- EP-A2- 1 085 187
- EP-A2- 1 215 384
- AT-U1- 4 195
- DE-A1- 4 439 573
- DE-A1-102005 044 738
- DE-A1-102007 060 218
- DE-A1-102011 005 865
- DE-A1-102012 202 857

## Beschreibung

Die vorliegende Erfindung betrifft ein Verfahren zum Betrieb einer Brennkraftmaschine mit den Merkmalen gemäß Anspruch 1.

Wie allgemein bekannt, besteht beim Betrieb einer Brennkraftmaschine mit einem Abgasturbolader während des Schubbetriebes bzw. eines Schaltvorganges das Problem, dass die Drehzahl der Turbine bzw. des Verdichters des Abgasturboladers abfällt, da keine ausreichende Abgasenergie zum Antrieb der Turbine bereitsteht. Infolgedessen steht bei einem anschließenden Wiedereinsetzen kein ausreichender Ladedruck zur Verfügung. Um dem entgegenzuwirken, kann das Massenträgheitsmoment der Läufergruppe des Abgasturboladers reduziert werden, beispielsweise durch den Einsatz von leichten Materialen für das Verdichter- und Turbinenrad. Hier bestehen jedoch Probleme hinsichtlich der Dauerhaltbarkeit. Ein weiterer Ansatz ist es, die Reibleistung der Läufergruppe in Gleitlagern durch den Einsatz von Wälzlagern zu verringern. Hier bestehen jedoch Nachteile hinsichtlich der Abstrahlung von Körperschall und der Lebensdauer. Ein noch weiterer Ansatz besteht darin, dem Drehzahlabfall des Abgasturboladers während des Schubbetriebes bzw. eines Schaltvorganges mit innermotorischen Maßnahmen entgegenzuwirken.

Gemäß dem Dokument DE3539578A1 ist es beispielsweise Stand der Technik, beim Schubbetrieb bzw. bei einem Schaltvorgang einer Brennkraftmaschine mit einem Abgasturbolader, in einzelnen Zylindern die Zündung abzuschalten, den Zündzeitpunkt in den verbleibenden Zylindern nach spät zu verschieben, Kraftstoff einzuspritzen sowie Frischluft vor die Turbine eines Abgasturboladers zu leiten, so dass durch den so bereitgestellten Wärmestrom die Drehzahl der Turbine aufrecht gehalten wird und bei einem darauf folgenden Wiedereinsetzen ein ausreichender Ladedruck zur Verfügung steht.

Gemäß dem Dokument DE102005010792A1 ist es weiterhin Stand der Technik, stromab eines Verdichters in der Ansaugleitung einer Brennkraftmaschine eine erste Drosselklappe, stromauf des Verdichters eine weitere Drosselklappe anzuordnen sowie einen ersten Bypass vorzusehen, mit dem der Verdichter umgangen werden kann. Der Bypass umfasst ein Ventil, mit dem der Durchsatz durch den Bypass beeinflusst werden kann. Beim Schubbetrieb bzw. einem Schaltvorgang der Brennkraftmaschine werden die erste und die weitere Drosselklappe in Schließrichtung bewegt, so dass ein gewünschtes Druckniveau stromab des Verdichters aufrecht gehalten wird und bei einem Wiedereinsetzen bzw. einem positiven Lastwechsel das jeweilige gewünschte Drehmoment bereitgestellt werden kann. Um ein unerwünschtes Pumpen des Verdichters zu vermeiden, wird zudem während des Schubbetriebes bzw. eines Schaltvorganges das Ventil im Bypass geöffnet, so dass ein Hochdruck-Kreisstrom über den Verdichter erzeugt und der Druck stromab des Verdichters auf einem hohen Niveau gehalten wird.

Darüber hinaus sind Brennkraftmaschinen mit einer variablen Ventilsteuerung Stand der Technik. Mittels einer solchen variablen Ventilsteuerung können die Steuerzeiten der Ein- und Auslassventile der Brennkraftmaschine so beeinflusst werden, dass eine so genannte Ventilüberschneidung erfolgt. D. h. es gibt eine gewisse Zeit- bzw. Winkelspanne, bei der die Ein- und Auslassventile geöffnet sind.

Außerdem ist es Stand der Technik, die Verdichtung einer Brennkraftmaschine variabel zu gestalten, insbesondere durch eine Veränderung des Kompressionsvolumens. Beispielsweise gemäß dem Dokument DE10221334A1 ist es Stand der Technik, den einen Verbund aus Zylinderkopf und Zylinderblock gegenüber dem Kurbelgehäuse einer Brennkraftmaschine zu verlagern, so dass das Kompressionsvolumen variiert werden kann. Bekannt ist es dazu auch, die Kurbelwelle gegenüber dem Zylinderkopf bzw. Zylinderblock zu verlagern. Weiterhin ist es Stand der Technik, das Kühlsystem einer Brennkraftmaschine bedarfsgerecht auszulegen. Beispielsweise kann die Kühlmittelpumpe zu- oder abgeschaltet bzw. hinsichtlich ihrer Förderleistung variiert werden, je nach Kühlbedarf. Weiterhin können mehrere Kühlkreisläufe vorgesehen sein, insbesondere ein innerer und ein äußerer Kühlkreislauf, wobei der äußere Kühlkreislauf erst dann aktiviert wird, wenn der innere Kühlkreislauf nicht mehr ausreichend Wärme von der Brennkraftmaschine abführt.

Ferner ist es gemäß dem Dokument DE102009060357A1 Stand der Technik, mittels einer Sekundärluftpumpe dem Abgas einer Brennkraftmaschine Luft beizumischen, so dass in Verbindung mit einer späten Kraftstoffzufuhr in den Zylinder bzw. einem späten Zündzeitpunkt eine Nachverbrennung der Abgase erfolgt, wobei durch den so bereitgestellten Wärmestrom die Drehzahl der Turbine aufrecht gehalten wird und bei einem darauf folgenden Wiedereinsetzen ein ausreichender Ladedruck zur Verfügung steht.

Weiterhin ist eine so genannte Niederdruck-Abgasrückführung Stand der Technik, wie zum Beispiel in dem Dokument DE102011009849A1 beschrieben. Die Brennkraftmaschine verfügt dabei über eine Strömungsverbindung zwischen der Abgasleitung stromab der Turbine und der Ansaugleitung stromauf des Verdichters, die mittels eines Ventils z. B. kontinuierlich freigegeben oder geschlossen werden kann.

Außerdem ist es gemäß dem Dokument DE102005017410A1 Stand der Technik, die Gaswechselventile einer Brennkraftmaschine derart zu betätigen, dass eine so genannte Impulsaufladung erfolgt, d. h. eine Erhöhung der Zylinderfüllung.

Es ist Aufgabe der vorliegenden Erfindung, einer Verringerung der Drehzahl der Turbine bzw. des Verdichters des Abgasturboladers einer Brennkraftmaschine während des Schubbetriebes bzw. Schaltvorganges möglichst effektiv entgegenzuwirken.

Diese Aufgabe wird erfindungsgemäß mittels eines Verfahrens zum Betrieb einer Brennkraftmaschine für den Antrieb eines Fahrzeuges mit einem Schaltgetriebe, mit einem Abgasturbolader, einer ersten Drosselklappe stromab des Verdichters, einer variablen Verdichtung und einer variablen Ventilsteuerung während des Schubbetriebs oder bei einem Schaltvorgang mit folgenden Schritten gelöst:
- Öffnen der ersten Drosselklappe stromab des Verdichters,
- Anheben der Verdichtung,
- Einstellung einer Ventilüberschneidung der Ein- und Auslassventile.

In einer möglichen Ausführung der vorliegenden Erfindung wird die Brennkraftmaschine nicht befeuert, d. h. es wird den Zylindern kein Kraftstoff zugeführt, so dass die Brennkraftmaschine quasi nur als Pumpe wirkt. In einer weiteren möglichen Ausführung der vorliegenden Erfindung wird die Brennkraftmaschine befeuert, d. h. es wird den Zylindern Kraftstoff zugeführt, jedoch erfolgt die Umsetzung des Kraftstoffes derart, dass kein Drehmoment durch die Brennkraftmaschine bereitgestellt wird. Dadurch, dass die erste Drosselklappe stromab des Verdichters geöffnet wird, gelangt das von der Brennkraftmaschine angesaugte bzw. von dem Verdichter geförderte Fluid, also die ggf. mit Abgas der Brennkraftmaschine vermischte Umgebungsluft, ungehindert zu den Zylindern der Brennkraftmaschine. Insbesondere wird die erste Drosselklappe vollständig geöffnet. Durch das Anheben der Verdichtung, wird das Fluid in den Zylindern auf einen höheren Druck und eine höhere Temperatur verdichtet. Das bedeutet, dass gegenüber einer nicht angehobenen Verdichtung dem Fluid mehr Wärme zugeführt wird, so dass einerseits einem Abkühlen der Brennkraftmaschine durch den stets stattfindenden Übergang von Wärme von dem Fluid zu der Brennkraftmaschine bzw. den brennraumangrenzenden Bauteilen wie den Laufbuchsen, dem Zylinderkopf und den Wandungen der Auslasskanäle entgegengewirkt wird bzw. durch den Übergang von Wärme von dem Fluid zu dem Abgasturbolader, insbesondere der Turbine und dem Turbinengehäuse, diese Bauteile weniger stark bzw. langsamer abkühlen. Andererseits weist das Fluid, welches im Schubbetrieb bzw. bei einem Schaltvorgang der Turbine des Abgasturboladers zugeführt wird, infolge des angehobenen Verdichtungsverhältnisses eine größere innere Energie auf bzw. die Enthalpie des Fluides ist höher, so dass durch eine Umwandlung der inneren Energie/Enthalpie des Fluides mittels der Turbine in Rotationsenergie mehr mechanische Energie zum Antrieb des Verdichters bereitsteht und somit einer Verringerung der Drehzahl der Turbine bzw. des Verdichters des Abgasturboladers der Brennkraftmaschine während des Schubbetriebes bzw. bei einem Schaltvorgang effektiv entgegengewirkt wird. Insbesondere wird die maximal mögliche Verdichtung eingestellt. Dadurch, dass eine Einstellung einer Ventilüberschneidung der Ein- und Auslassventile vorgenommen wird, erfolgt erfindungsgemäß eine bessere Füllung der Zylinder mit dem zuströmenden Fluid bzw. ein besseres Entleeren der Zylinder, d. h. es wird der Turbine ein größerer Anteil an Fluid zugeführt, so dass einer Verringerung der Drehzahl der Turbine bzw. des Verdichters des Abgasturboladers der Brennkraftmaschine während des Schubbetriebes bzw. bei einem Schaltvorgang effektiv entgegengewirkt wird. Insbesondere wird die Einstellung einer maximalen Ventilüberschneidung der Ein- und Auslassventile vorgenommen. Zusammengefasst werden mittels des erfindungsgemäßen Verfahrens der Massenstrom, der Druck und die Temperatur des Fluides erhöht, das in einer bestimmten Zeit durch die Brennkraftmaschine strömt bzw. welches stromauf der Turbine für den Antrieb des Verdichters bereitsteht. Erfolgt anschließend an die Schubphase bzw. den Schaltvorgang, welche gemäß den Merkmalen des erfindungsgemäßen Verfahrens so beeinflusst werden, dass die Drehzahl der Turbine bzw. des Verdichters des Abgasturboladers möglichst wenig verringert wird, ein Wiedereinsetzen der Brennkraftmaschine, d. h. die Vorgabe eines bestimmten gewünschten positiven Drehmoments, kann dieses Drehmoment schneller bereitgestellt werden.

Weitere vorteilhafte Ausgestaltungen der vorliegenden Erfindung sind in den abhängigen Ansprüchen dargestellt und werden im folgenden Ausführungsbeispiel genauer beschrieben.

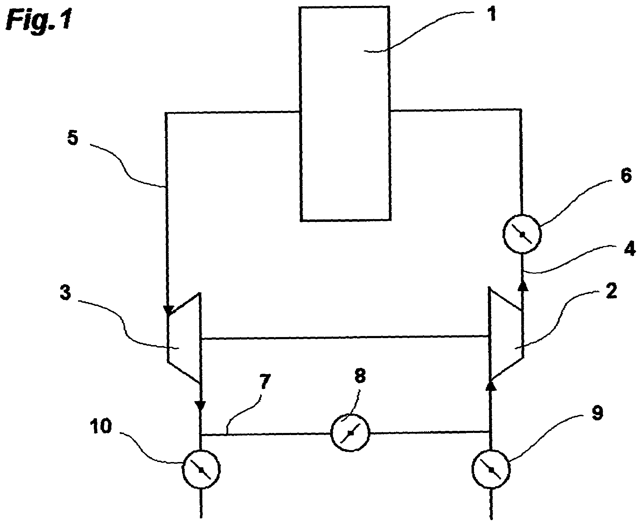

Wie in Figur 1 dargestellt, weist eine Brennkraftmaschine 1 einen Abgasturbolader mit einem Verdichter 2 und mit einer Turbine 3 auf. Der Verdichter 2 ist in einer Ansaugleitung 4 und die Turbine 3 in einer Abgasleitung 5 angeordnet. Wie allgemein bekannt, wird den Zylindern der Brennkraftmaschine 1 mittels Injektoren Kraftstoff zugeführt. In der Ansaugleitung 4 ist eine erste Drosselklappe 6 stromab des Verdichters 2 angeordnet. Zwischen der Abgasleitung 5 stromab der Turbine 3 und der Ansaugleitung 4 stromauf des Verdichters 2 ist eine Strömungsverbindungsleitung 7 angeordnet. D. h. die Brennkraftmaschine 1 umfasst eine so genannte Niederdruck-Abgasrückführung. In der Strömungsverbindungsleitung 7 ist ein Ventil 8 angeordnet, das z. B. kontinuierlich oder stufenweise freigegeben bzw. geschlossen werden kann. In der Ansaugleitung 4 ist weiterhin stromauf des Verdichters 2 und stromauf der Einmündung der Strömungsverbindungsleitung 7 in die Ansaugleitung 4 eine zweite Drosselklappe 9 angeordnet. Weiterhin ist in der Abgasleitung 5 stromab der Turbine 3 und stromab der Abzweigung der Strömungsverbindungsleitung 7 eine dritte Drosselklappe 10 angeordnet. Die Brennkraftmaschine 1 weist eine so genannte variable Verdichtung auf, d. h. das Verdichtungsverhältnis kann verändert werden, beispielsweise kontinuierlich oder stufenweise. Zur Realisierung des variablen Verdichtungsverhältnisses sind verschiedene Möglichkeiten bekannt. Beispielsweise ist es bekannt, die Zylinder sowie den Zylinderkopf gegenüber dem Kurbeltrieb zu verschieben, mittels eines Nebenkolbens im Zylinderkopf das Brennraumvolumen zu verändern, die Kolben mit variabler Kompressionshöhe zu versehen, exzentrische Hubzapfen zu verwenden oder die Länge der Pleuel variabel zu gestalten, die Pleuel zweiteilig auszuführen und mit weiteren Pleueln anzulenken oder die Lage der Kurbelwelle gegenüber dem Zylinderkopf zu verändern. Wie das Verdichtungsverhältnis verändert wird, ist für das erfindungsgemäße Verfahren nicht wesentlich. Die Brennkraftmaschine 1 weist weiterhin eine variable Ventilsteuerung auf. Mittels der variablen Ventilsteuerung ist es möglich, eine Ventilüberschneidung der Ein- und Auslassventile der Brennkraftmaschine 1 einzustellen. D. h. es gibt eine gewisse Zeit- bzw.

Winkelspanne, bei der die Ein- und Auslassventile geöffnet sind. Natürlich kann die variable Ventilsteuerung auch so ausgeführt sein, dass neben den Steuerzeiten auch der Hub der Ein- und Auslassventile eingestellt werden kann. Zur Realisierung einer variablen Ventilsteuerung sind verschiedene Möglichkeiten bekannt. Beispielsweise ist es bekannt, die Ein- und Auslassventile mittels eines elektromechanischen oder elektrohydraulischen Ventiltriebs variabel zu betätigen, d. h. so können die Steuerzeiten und der Hub der Ein- und Auslassventile in weiten Bereichen variiert werden und auch während der Einlass- bzw. Auslassphase mehrfach betätigt werden. Bekannt ist es außerdem, mittels eines so genannten hydraulischen Nockenwellenstellers lediglich die Steuerzeiten der Einlassventile, der Auslassventile oder der Einlass- und Auslassventile zu variieren, so dass eine Ventilüberschneidung der Ein- und Auslassventile einstellbar ist. Die Brennkraftmaschine 1 wirkt zum Antrieb eines nicht dargestellten Fahrzeugs mit einem ebenfalls nicht dargestellten Schaltgetriebe zusammen, wie allgemein bekannt. Das Schaltgetriebe weist mehrere Übersetzungsverhältnisse auf, wobei während eines Schaltvorganges zwischen Übersetzungsverhältnissen des Schaltgetriebes gewechselt wird. Wie weiterhin bekannt, kann die Brennkraftmaschine 1 im Schub betrieben werden. D. h. die Brennkraftmaschine 1 wird so betrieben, dass diese kein Drehmoment abgibt, also das Fahrzeug wird nicht angetrieben, sondern abgebremst. Hierbei tritt das Problem auf, dass die Drehzahl der Turbine 3 bzw. des Verdichters 2 des Abgasturboladers abfällt, da keine ausreichende Abgasenergie zum Antrieb der Turbine 3 bereitsteht. Dieses Problem kann auch bei einem Schaltvorgang auftreten, bei dem Wechsel zwischen zwei Übersetzungsverhältnissen des Schaltgetriebes. Insbesondere unterbricht der Fahrer bei einem manuellen Schaltvorgang die Betätigung des Fahrpedals des Fahrzeugs, betätigt die Kupplung sowie den Schalthebel. Dabei kann die Brennkraftmaschine 1 zeitweise im Schub betrieben werden, also zwischen dem Beenden der Betätigung des Fahrpedals und dem Beginn der Betätigung der Kupplung. Nach der Betätigung der Kupplung sinkt das Abgasenergieangebot zum Antrieb der Turbine 3, so dass die Drehzahl der Turbine 3 bzw. des Verdichters 2 des Abgasturboladers abfällt. Insofern ergibt sich sowohl beim Schubbetrieb der Brennkraftmaschine 1 als auch bei einem Schaltvorgang das Problem, dass das Abgasenergieangebot zum Antrieb der Turbine 3 sinkt und bei einem anschließenden Wiedereinsetzen, also einem erneuten Betätigen des Fahrpedals kein ausreichender Ladedruck bereitsteht, was als störend wahrgenommen wird.

Erfindungsgemäß wird in einer möglichen Ausführung der vorliegenden Erfindung folgendermaßen verfahren. Wird erkannt, dass die Brennkraftmaschine 1 im Schub betrieben wird bzw. dass ein Schaltvorgang erfolgt, beispielsweise dadurch, dass der Fahrer die Betätigung des Fahrpedals unterbricht bzw. die Kupplung und/oder der Schalthebel betätigt wird und die Drehzahl der Kurbelwelle der Brennkraftmaschine 1 jedoch einen gewissen Schwellenwert überschreitet, dann erfolgt eine Abschaltung der Zufuhr von Kraftstoff zu den Zylindern, ein Öffnen der ersten Drosselklappe 6 stromab des Verdichters 2, ein Anheben des Verdichtungsverhältnisses und die Einstellung einer Ventilüberschneidung der Ein- und Auslassventile. Insbesondere wird die erste Drosselklappe 6 vollständig geöffnet und weiterhin die maximal mögliche Verdichtung eingestellt sowie die maximale Ventilüberschneidung der Ein- und Auslassventile eingestellt. Die zweite Drosselklappe 9 und die dritte Drosselklappe 10 sind geöffnet, insbesondere vollständig geöffnet. Das in der Strömungsverbindungsleitung 7 angeordnete Ventil 8 ist geschlossen. Dadurch, dass die erste Drosselklappe 6 stromab des Verdichters 2 geöffnet wird, gelangt die von der Brennkraftmaschine 1 angesaugte bzw. von dem Verdichter 2 geförderte Umgebungsluft ungehindert zu den Zylindern der Brennkraftmaschine 1. Da die Zufuhr von Kraftstoff zu den Zylindern abgeschaltet ist, wird nur noch Umgebungsluft von der Brennkraftmaschine 1 angesaugt bzw. von dem Verdichter 2 gefördert. Da das Verdichtungsverhältnis angehoben ist, wird die Umgebungsluft in den Zylindern auf einen vergleichsweise hohen Druck bzw. eine vergleichsweise hohe Temperatur verdichtet. Infolge der Einstellung einer Ventilüberschneidung der Ein- und Auslassventile erfolgt eine optimale Füllung der Zylinder mit der zuströmenden Umgebungsluft bzw. ein optimales Entleeren der Zylinder, d. h. es wird der Turbine 3 ein möglichst großer Anteil an Umgebungsluft zugeführt, wobei die Umgebungsluft eine möglichst hohe innere Energie/Enthalpie aufweist. Zusammengefasst werden mittels des erfindungsgemäßen Verfahrens der Massenstrom, der Druck und die Temperatur der Umgebungsluft erhöht, die in einer bestimmten Zeit durch die Brennkraftmaschine 1 strömt bzw. welche stromauf der Turbine 3 für den Antrieb des Verdichters 2 bereitsteht, so dass die Drehzahl der Turbine 3 bzw. des Verdichters 2 möglichst wenig verringert wird.

Zusätzlich zu dem Öffnen der ersten Drosselklappe 6 stromab des Verdichters 2, dem Anheben der Verdichtung und der Einstellung einer Ventilüberschneidung der Ein- und Auslassventile kann erfindungsgemäß die zweite Drosselklappe 9 in Schließrichtung bewegt bzw. angedrosselt werden. Durch dieses Nachführen der zweiten Drosselklappe 9 wird einer Verringerung der Drehzahl des Verdichters 2 entgegengewirkt, da der Betriebspunkt des Verdichters 2 in einen Bereich verschoben wird, wo er einen höheren Wirkungsgrad aufweist.

Verfügt die Brennkraftmaschine 1 weiterhin über ein bedarfsgerecht einstellbares Kühlsystem, ist es erfindungsgemäß vorgesehen, dass zusätzlich zu den oben genannten Maßnahmen während des Schubbetriebs oder eines Schaltvorganges das Kühlsystem derart eingestellt wird, dass möglichst wenig Wärme an die Umgebung abgegeben wird. Beispielsweise kann dazu die Kühlmittelpumpe abgeschaltet oder so eingestellt werden, dass ihre Förderleistung minimal ist. D. h. für den Fall, dass ein innerer und ein äußerer Kühlkreislauf vorhanden ist, wobei der äußere Kühlkreislauf erst dann aktiviert wird, wenn der innere Kühlkreislauf nicht mehr ausreichend Wärme von der Brennkraftmaschine 1 abführt, wird der äußere Kühlkreislauf deaktiviert, sofern er aktiv ist, so dass nur noch der innere Kühlkreislauf aktiv ist.

Da die Brennkraftmaschine 1 die Strömungsverbindungsleitung 7 zwischen der Abgasleitung 5 und der Ansaugleitung 4 aufweist, d. h. eine so genannte Niederdruck-Abgasrückführung, kann zusätzlich zu den oben genannten Maßnahmen während des Schubbetriebs bzw. während des Schaltvorganges das in der Strömungsverbindungsleitung 7 angeordnete Ventil 8 geöffnet werden, so dass die lediglich in einem gewissen Maße abgekühlte und entspannte Umgebungsluft stromab der Turbine 3 der Ansaugleitung 4 stromauf des Verdichters 2 wieder zugeführt wird. Angenommen, stromab der Turbine 3 und stromauf der Abzweigung der Strömungsverbindungsleitung 7 ist ein nicht gezeigter Katalysator in der Abgasleitung 5 angeordnet, dann wird der durch das erfindungsgemäße Verfahren vergleichsweise große Anteil an Umgebungsluft stromab der Turbine 3 dem Katalysator zugeführt, wobei eine exotherme Reaktion in Verbindung mit noch vorhandenem Kraftstoff angefacht bzw. verstärkt wird, so dass die von dem Verdichter 2 geförderte Umgebungsluft zu den Zylindern der Brennkraftmaschine 1 zusätzlich aufgeheizt ist und einer Verringerung der Drehzahl des Verdichters 2 noch besser entgegengewirkt wird. Diese Rückführung der Umgebungsluft von der Abgasleitung 5 in die Ansaugleitung 4 kann durch die dritte Drosselklappe 10, die in der Abgasleitung 5 angeordnet ist, beeinflusst bzw. verstärkt werden. D. h. wird die dritte Drosselklappe 10 teilweise oder ganz geschlossen bzw. in Schließrichtung bewegt, wird die Rückführung der über der Turbine 3 entspannten Umgebungsluft weiter verbessert bzw. erzwungen. Natürlich kann zusätzlich dazu auch die zweite Drosselklappe 9, die in der Ansaugleitung 4 angeordnet ist, ganz oder teilweise geschlossen werden. Angenommen die zweite Drosselklappe 9 und die dritte Drosselklappe 10 werden ganz geschlossen, dann ergibt sich eine Zirkulation der Umgebungsluft zwischen der Abgasleitung 5 stromab der Turbine 3, der Ansaugleitung 4 stromauf des Verdichters 2 und der Brennkraftmaschine 1, wobei der Umgebungsluft während des Schubbetriebes bzw. des Schaltvorgangs insbesondere infolge der erfindungsgemäß angehobenen Verdichtung, stets möglichst viel Energie zugeführt wird, so dass die Drehzahl des Verdichters 2 möglichst wenig verringert wird.

Erfindungsgemäß kann weiterhin mittels einer Sekundärluftpumpe zusätzlich Umgebungsluft der Abgasleitung 5 stromauf der Turbine 3 zugeführt werden, so dass der Massenstrom, der über die Turbine 3 fließt, weiter erhöht wird und einer Verringerung der Drehzahl der Turbine 3 bzw. des Verdichters 2 entgegengewirkt wird. Erfindungsgemäß kann für den Fall, dass die Einlassventile derart betätigt werden können, dass diese, während die Umgebungsluft in die Zylinder hineinströmt, eine Vielzahl von Hubbewegungen ausführen, zusätzlich zu den schon genannten Maßnahmen zur Vermeidung einer Verringerung der Drehzahl der Turbine 3 bzw. des Verdichters 2 während des Schubbetriebs oder eines Schaltvorganges, die in die Zylinder hineinströmende Umgebungsluft angeregt werden, so dass die Zylinderfüllung erhöht wird bzw. eine Nachladung erfolgt. Erfindungsgemäß kann für den Fall, dass die Auslassventile derart betätigt werden können, dass diese, während die Umgebungsluft bzw. das Fluid aus den Zylindern herausströmt bzw. in die Abgasleitung 5 stromauf der Turbine 3 hineinströmt, eine Vielzahl von Hubbewegungen ausführen, zusätzlich zu den schon genannten Maßnahmen zur Vermeidung einer Verringerung der Drehzahl der Turbine 3 bzw. des Verdichters 2 während des Schubbetriebs oder eines Schaltvorganges, durch eine Vielzahl von Hubbewegungen der Auslassventile das aus den Zylindern herausströmende bzw. in die Abgasleitung 5 stromauf der Turbine 3 hineinströmende Fluid angeregt werden, so dass die Turbine 3 stoßartig mit dem Fluid beaufschlagt wird. Die Betätigung der Auslassventile, dass diese, während das Fluid aus den Zylindern herausströmt bzw. in die Abgasleitung 5 stromauf der Turbine 3 hineinströmt, eine Vielzahl von Hubbewegungen ausführen, kann in Abhängigkeit davon erfolgen, ob das Gehäuse der Turbine 3 ein- oder mehrflutig ausgeführt ist, d. h. die Frequenz und Amplitude der Hubbewegungen der Auslassventile kann so eingestellt werden, dass das Fluid stromauf der Turbine 3 so pulsartig angeregt wird, dass die Turbine 3 in Abhängigkeit der Anzahl an Turbineneintritten derart beaufschlagt wird, dass einer Verringerung der Drehzahl der Turbine 3 bzw. des Verdichters 2 möglichst wirksam entgegengewirkt wird.

Wird nun erkannt, dass die Schubphase bzw. der Schaltvorgang beendet ist, beispielsweise dadurch, dass der Fahrer die Betätigung des Fahrpedals wieder aufnimmt bzw. die Kupplung und/oder der Schalthebel nicht mehr betätigt wird, dann erfolgt anschließend an die Schubphase bzw. den Schaltvorgang, welche gemäß den Merkmalen des erfindungsgemäßen Verfahrens so beeinflusst werden, dass die Drehzahl der Turbine 3 bzw. des Verdichters 2 möglichst wenig verringert wird, ein Wiedereinsetzen der Brennkraftmaschine 1, d. h. die Vorgabe eines bestimmten gewünschten positiven Drehmoments, das durch das erfindungsgemäße Verfahren möglichst schnell wieder bereitgestellt wird.

Erfindungsgemäß wird in einer weiteren möglichen Ausführung der vorliegenden Erfindung folgendermaßen verfahren. Wird erkannt, dass die Brennkraftmaschine 1 im Schub betrieben wird bzw. dass ein Schaltvorgang erfolgt, beispielsweise dadurch, dass der Fahrer die Betätigung des Fahrpedals unterbricht bzw. die Kupplung und/oder der Schalthebel betätigt wird und die Drehzahl der Kurbelwelle der Brennkraftmaschine 1 jedoch einen gewissen Schwellenwert überschreitet, dann erfolgt weiterhin die Zufuhr von Kraftstoff zu den Zylindern. Den Zylindern der Brennkraftmaschine 1 wird der Kraftstoff bevorzugt mittels Injektoren zugeführt, deren Öffnungen direkt in den jeweiligen Zylindern mündet, wobei die Zufuhr von Kraftstoff im Ansaug- oder Verdichtungstakt bei geschlossenen Auslassventilen erfolgt. Außerdem erfolgt ein Öffnen der ersten Drosselklappe 6 stromab des Verdichters 2, ein Anheben des Verdichtungsverhältnisses und die Einstellung einer Ventilüberschneidung der Ein- und Auslassventile. Darüber hinaus erfolgt eine Fremdzündung des Kraftstoff-Luft-Gemisches in den Zylindern. Diese Fremdzündung erfolgt bei geöffneten Auslassventilen, bevorzugt in einer späten Phase des Ausschubtaktes, wobei die Verbrennung des Kraftstoff-Luft-Gemisches vor dem Öffnen der Einlassventile abgeschlossen ist. D. h. die Zufuhr von Kraftstoff bzw. die Befeuerung der Brennkraftmaschine 1 erfolgt derart, dass kein Drehmoment durch die Brennkraftmaschine 1 bereitgestellt wird, jedoch die innere Energie bzw. die Enthalpie des Fluides, also des Abgases stromauf der Turbine 3 erhöht wird, so dass einer Verringerung der Drehzahl der Turbine 3 bzw. des Verdichters 2 entgegengewirkt wird. Insbesondere wird die erste Drosselklappe 6 vollständig geöffnet und weiterhin die maximal mögliche Verdichtung eingestellt sowie die maximale Ventilüberschneidung der Ein- und Auslassventile eingestellt. Die zweite Drosselklappe 9 und die dritte Drosselklappe 10 sind geöffnet, insbesondere vollständig geöffnet. Das in der Strömungsverbindungsleitung 7 angeordnete Ventil 8 ist geschlossen. Dadurch, dass die erste Drosselklappe 6 stromab des Verdichters 2 geöffnet wird, gelangt die von der Brennkraftmaschine 1 angesaugte bzw. von dem Verdichter 2 geförderte Umgebungsluft ungehindert zu den Zylindern der Brennkraftmaschine 1. Da das Verdichtungsverhältnis angehoben ist, wird die Umgebungsluft in den Zylindern auf einen vergleichsweise hohen Druck bzw. eine vergleichsweise hohe Temperatur verdichtet. Infolge der Einstellung einer Ventilüberschneidung der Ein- und Auslassventile erfolgt eine optimale Füllung der Zylinder mit der zuströmenden Umgebungsluft bzw. ein optimales Entleeren der Zylinder, d. h. es wird der Turbine 3 Abgas mit einer möglichst hohen inneren Energie/Enthalpie zugeführt. Zusammengefasst werden mittels des erfindungsgemäßen Verfahrens der Massenstrom, der Druck und die Temperatur des Abgases erhöht, welches stromauf der Turbine 3 für den Antrieb des Verdichters 2 bereitsteht, so dass die Drehzahl der Turbine 3 bzw. des Verdichters 2 möglichst wenig verringert wird.

Zusätzlich zu dem Öffnen der ersten Drosselklappe 6 stromab des Verdichters 2, dem Anheben der Verdichtung und der Einstellung einer Ventilüberschneidung der Ein- und Auslassventile kann erfindungsgemäß die zweite Drosselklappe 9 in Schließrichtung bewegt bzw. angedrosselt werden. Durch dieses Nachführen der zweiten Drosselklappe 9 wird einer Verringerung der Drehzahl des Verdichters 2 entgegengewirkt, da der Betriebspunkt des Verdichters 2 in einen Bereich verschoben wird, wo er einen höheren Wirkungsgrad aufweist.

Verfügt die Brennkraftmaschine 1 weiterhin über ein bedarfsgerecht einstellbares Kühlsystem, ist es erfindungsgemäß vorgesehen, dass zusätzlich zu den oben genannten Maßnahmen während des Schubbetriebs oder eines Schaltvorganges das Kühlsystem derart eingestellt wird, dass möglichst wenig Wärme an die Umgebung abgegeben wird. Beispielsweise kann dazu die Kühlmittelpumpe abgeschaltet oder so eingestellt werden, dass ihre Förderleistung minimal ist. D. h. für den Fall, dass ein innerer und ein äußerer Kühlkreislauf vorhanden ist, wobei der äußere Kühlkreislauf erst dann aktiviert wird, wenn der innere Kühlkreislauf nicht mehr ausreichend Wärme von der Brennkraftmaschine 1 abführt, wird der äußere Kühlkreislauf deaktiviert, sofern er aktiv ist, so dass nur noch der innere Kühlkreislauf aktiv ist.

Da die Brennkraftmaschine 1 die Strömungsverbindungsleitung 7 zwischen der Abgasleitung 5 und der Ansaugleitung 4 aufweist, d. h. eine so genannte Niederdruck-Abgasrückführung, kann zusätzlich zu den oben genannten Maßnahmen während des Schubbetriebs bzw. während des Schaltvorganges das in der Strömungsverbindungsleitung 7 angeordnete Ventil 8 geöffnet werden, so dass das lediglich in einem gewissen Maße abgekühlte und entspannte Abgas stromab der Turbine 3 der Ansaugleitung 4 stromauf des Verdichters 2 wieder zugeführt wird. Angenommen, stromab der Turbine 3 und stromauf der Abzweigung der Strömungsverbindungsleitung 7 ist ein nicht gezeigter Katalysator in der Abgasleitung 5 angeordnet, dann wird der durch das erfindungsgemäße Verfahren vergleichsweise große Anteil an Abgas stromab der Turbine 3 dem Katalysator zugeführt, wobei eine exotherme Reaktion in Verbindung mit noch vorhandenem Sauerstoff angefacht bzw. verstärkt wird, so dass die von dem Verdichter 2 geförderte Umgebungsluft zu den Zylindern der Brennkraftmaschine 1 zusätzlich aufgeheizt ist und einer Verringerung der Drehzahl des Verdichters 2 noch besser entgegengewirkt wird. Diese Rückführung des Abgases von der Abgasleitung 5 in die Ansaugleitung 4 kann durch die dritte Drosselklappe 10, die in der Abgasleitung 5 angeordnet ist, beeinflusst bzw. verstärkt werden. D. h. wird die dritte Drosselklappe 10 teilweise oder ganz geschlossen bzw. in Schließrichtung bewegt, wird die Rückführung des über der Turbine 3 entspannten Abgases weiter verbessert bzw. erzwungen. Natürlich kann zusätzlich dazu auch die zweite Drosselklappe 9, die in der Ansaugleitung 5 angeordnet ist, teilweise geschlossen werden.

Erfindungsgemäß kann weiterhin mittels einer Sekundärluftpumpe zusätzlich Umgebungsluft der Abgasleitung 5 stromauf der Turbine 3 zugeführt werden, so dass einerseits der Massenstrom, der über die Turbine 3 fließt, weiter erhöht wird bzw. eine Nachverbrennung des Kraftstoffes in der Abgasleitung 5 nach Austritt aus den Zylindern gefördert und einer Verringerung der Drehzahl der Turbine 3 bzw. des Verdichters 2 entgegengewirkt wird. Erfindungsgemäß kann für den Fall, dass die Einlassventile derart betätigt werden können, dass diese, während die Umgebungsluft in die Zylinder hineinströmt, eine Vielzahl von Hubbewegungen ausführen, zusätzlich zu den schon genannten Maßnahmen zur Vermeidung einer Verringerung der Drehzahl der Turbine 3 bzw. des Verdichters 2 während des Schubbetriebs oder eines Schaltvorganges, die in die Zylinder hineinströmende Umgebungsluft angeregt werden, so dass die Zylinderfüllung erhöht wird bzw. eine Nachladung erfolgt. Erfindungsgemäß kann für den Fall, dass die Auslassventile derart betätigt werden können, dass diese, während das Abgas bzw. das brennende Gemisch aus Umgebungsluft und Kraftstoff aus den Zylindern herausströmt bzw. in die Abgasleitung 5 stromauf der Turbine 3 hineinströmt, eine Vielzahl von Hubbewegungen ausführen, zusätzlich zu den schon genannten Maßnahmen zur Vermeidung einer Verringerung der Drehzahl der Turbine 3 bzw. des Verdichters 2 während des Schubbetriebs oder eines Schaltvorganges, durch eine Vielzahl von Hubbewegungen der Auslassventile das aus den Zylindern herausströmende bzw. in die Abgasleitung 5 stromauf der Turbine 3 hineinströmende Abgas bzw. brennende Gemisch aus Umgebungsluft und Kraftstoff angeregt werden, so dass die Turbine 3 stoßartig mit diesem Fluid beaufschlagt wird. Die Betätigung der Auslassventile, dass diese, während dieses Fluid aus den Zylindern herausströmt bzw. in die Abgasleitung 5 stromauf der Turbine 3 hineinströmt, eine Vielzahl von Hubbewegungen ausführen, kann in Abhängigkeit davon erfolgen, ob das Gehäuse der Turbine 3 ein- oder mehrflutig ausgeführt ist, d. h. die Frequenz und Amplitude der Hubbewegungen der Auslassventile kann so eingestellt werden, dass dieses Gemisch aus Umgebungsluft und Kraftstoff stromauf der Turbine 3 so pulsartig angeregt wird, dass die Turbine 3 in Abhängigkeit der Anzahl an Turbineneintritten derart beaufschlagt wird, dass einer Verringerung der Drehzahl der Turbine 3 bzw. des Verdichters 3 möglichst wirksam entgegengewirkt wird.

Wird nun erkannt, dass die Schubphase bzw. der Schaltvorgang beendet ist, beispielsweise dadurch, dass der Fahrer die Betätigung des Fahrpedals wieder aufnimmt bzw. die Kupplung und/oder der Schalthebel nicht mehr betätigt wird, dann erfolgt anschließend an die Schubphase bzw. den Schaltvorgang, welche gemäß den Merkmalen des erfindungsgemäßen Verfahrens so beeinflusst werden, dass die Drehzahl der Turbine 3 bzw. des Verdichters 2 möglichst wenig verringert wird, ein Wiedereinsetzen der Brennkraftmaschine 1, d. h. die Vorgabe eines bestimmten gewünschten positiven Drehmoments, das durch das erfindungsgemäße Verfahren möglichst schnell wieder bereitgestellt wird.

## Patentansprüche

1. Verfahren zum Betrieb einer Brennkraftmaschine (1) für den Antrieb eines Fahrzeuges mit einem Schaltgetriebe, wobei
- die Brennkraftmaschine (1) einen Abgasturbolader mit einem Verdichter (2) und einer Turbine (3) aufweist,
- der Verdichter (2) in einer Ansaugleitung (4) und die Turbine (3) in einer Abgasleitung (5) angeordnet ist,
- in der Ansaugleitung (4) eine erste Drosselklappe (6) stromab des Verdichters (2) angeordnet ist,
- die Brennkraftmaschine (1) eine variable Verdichtung und eine variable Ventilsteuerung aufweist,
- wenn die Brennkraftmaschine (1) im Schub betrieben wird oder ein Schaltvorgang erfolgt, eine Abschaltung der Zufuhr von Kraftstoff zu den Zylindern, ein Öffnen der ersten Drosselklappe (6), ein Anheben der Verdichtung und die Einstellung einer Ventilüberschneidung der Ein- und Auslassventile erfolgt.

2. Verfahren zum Betrieb einer Brennkraftmaschine (1) für den Antrieb eines Fahrzeuges mit einem Schaltgetriebe, wobei
- die Brennkraftmaschine (1) einen Abgasturbolader mit einem Verdichter (2) und einer Turbine (3) aufweist,
- der Verdichter (2) in einer Ansaugleitung (4) und die Turbine (3) in einer Abgasleitung (5) angeordnet ist,
- in der Ansaugleitung (4) eine erste Drosselklappe (6) stromab des Verdichters (2) angeordnet ist,
- die Brennkraftmaschine (1) eine variable Verdichtung und eine variable Ventilsteuerung aufweist,
- wenn die Brennkraftmaschine (1) im Schub betrieben wird oder ein Schaltvorgang erfolgt, eine Zufuhr von Kraftstoff zu den Zylindern der Brennkraftmaschine (1), ein Öffnen der ersten Drosselklappe (6), ein Anheben der Verdichtung, die Einstellung einer Ventilüberschneidung der Ein- und Auslassventile erfolgt und eine Fremdzündung des Kraftstoff-Luft-Gemisches in den Zylindern dann erfolgt, wenn die Auslassventile geöffnet sind.

3. Verfahren nach Patentanspruch 1 oder 2, wobei die erste Drosselklappe (6) vollständig geöffnet wird sowie die maximal mögliche Verdichtung und die maximale Ventilüberschneidung der Ein- und Auslassventile eingestellt wird.

4. Verfahren gemäß Patentanspruch 1, 2 oder 3, wobei in der Ansaugleitung (4) stromauf des Verdichters (2) eine zweite Drosselklappe (9) angeordnet ist und die zweite Drosselklappe (9) in Schließrichtung bewegt wird.

5. Verfahren gemäß Patentanspruch 1 bis 4, wobei zwischen der Abgasleitung (5) stromab der Turbine (3) und der Ansaugleitung (4) stromauf des Verdichters (2) eine Strömungsverbindungsleitung (7) angeordnet ist, wobei in der Strömungsverbindungsleitung (7) ein Ventil (8) angeordnet ist und das Ventil (8) geöffnet wird.

6. Verfahren gemäß Patentanspruch 5, wobei in der Abgasleitung (5) stromab der Turbine (3) und stromab der Abzweigung der Strömungsverbindungsleitung (7) eine dritte Drosselklappe (10) angeordnet ist und die dritte Drosselklappe (10) in Schließrichtung bewegt wird.

7. Verfahren gemäß Patentanspruch 1 bis 6, wobei die Brennkraftmaschine (1) ein bedarfsgerecht einstellbares Kühlsystem aufweist und das Kühlsystem derart eingestellt wird, dass möglichst wenig Wärme an die Umgebung abgegeben wird.

8. Verfahren gemäß Patentanspruch 1 bis 7, wobei mittels einer Sekundärluftpumpe zusätzlich Umgebungsluft der Abgasleitung (5) stromauf der Turbine (3) zugeführt wird.

9. Verfahren gemäß Patentanspruch 1 bis 8, wobei die Einlassventile derart betätigt werden, dass diese, während die Umgebungsluft in die Zylinder hineinströmt, eine Vielzahl von Hubbewegungen ausführen, so dass die in den Zylinder hineinströmende Umgebungsluft angeregt und die Zylinderfüllung erhöht wird.

10. Verfahren gemäß Patentanspruch 1 bis 9, wobei die Auslassventile derart betätigt werden, dass diese, während Abgas aus den Zylindern herausströmt, eine Vielzahl von Hubbewegungen ausführen, so dass das aus den Zylindern herausströmende und in die Abgasleitung (5) stromauf der Turbine (3) hineinströmende Abgas angeregt wird und die Turbine (3) stoßartig mit dem Abgas beaufschlagt wird.

## Claims

1. Method for operating an internal combustion engine (1) for the drive of a vehicle having a gearbox, wherein
- the internal combustion engine (1) has an exhaust-gas turbocharger with a compressor (2) and a turbine (3),
- the compressor (2) is arranged in an intake line (4) and the turbine (3) is arranged in an exhaust line (5),
- a first throttle flap (6) is arranged in the intake line (4) downstream of the compressor (2),
- the internal combustion engine (1) has variable compression and variable valve timing,
- when the internal combustion engine (1) is in overrun operation or a shift process is performed, the feed of fuel to the cylinders is deactivated, the first throttle flap (6) is opened, the compression is increased, and a valve overlap of the inlet and outlet valves is set.

2. Method for operating an internal combustion engine (1) for the drive of a vehicle having a gearbox, wherein
- the internal combustion engine (1) has an exhaust-gas turbocharger with a compressor (2) and a turbine (3),
- the compressor (2) is arranged in an intake line (4) and the turbine (3) is arranged in an exhaust line (5),
- a first throttle flap (6) is arranged in the intake line (4) downstream of the compressor (2),
- the internal combustion engine (1) has variable compression and variable valve timing,
- when the internal combustion engine (1) is in overrun operation or a shift process is performed, a feed of fuel to the cylinders of the internal combustion engine (1), an opening of the first throttle flap (6), an increase of the compression and setting of a valve overlap of the inlet and outlet valves are performed, and an applied ignition of the fuel-air mixture in the cylinders is performed when the outlet valves are open.

3. Method according to Patent Claim 1 or 2, wherein the first throttle flap (6) is fully opened, and the maximum possible compression and the maximum valve overlap of the inlet and outlet valves are set.

4. Method according to Patent Claim 1, 2 or 3, wherein a second throttle flap (9) is arranged in the intake line (4) upstream of the compressor (2), and the second throttle flap (9) is moved in a closing direction.

5. Method according to Patent Claim 1 to 4, wherein a flow-connection line (7) is arranged between the exhaust line (5) downstream of the turbine (3) and the intake line (4) upstream of the compressor (2), wherein a valve (8) is arranged in the flow-connection line (7), and the valve (8) is opened.

6. Method according to Patent Claim 5, wherein a third throttle flap (10) is arranged in the exhaust line (5) downstream of the turbine (3) and downstream of the branching point of the flow-connection line (7), and the third throttle flap (10) is moved in a closing direction.

7. Method according to Patent Claim 1 to 6, wherein the internal combustion engine (1) has a cooling system which can be set in accordance with demand, and the cooling system is set such that as little heat as possible is released to the surroundings.

8. Method according to Patent Claim 1 to 7, wherein, by means of a secondary air pump, ambient air is additionally fed to the exhaust line (5) upstream of the turbine (3).

9. Method according to Patent Claim 1 to 8, wherein the inlet valves are actuated so as to perform a multiplicity of stroke movements while the ambient air flows into the cylinders, such that the ambient air flowing into the cylinders is stimulated, and the cylinder charge is increased.

10. Method according to Patent Claim 1 to 9, wherein the outlet valves are actuated so as to perform a multiplicity of stroke movements while exhaust gas flows out of the cylinders, such that the exhaust gas flowing out of the cylinders and flowing into the exhaust line (5) upstream of the turbine (3) is stimulated, and the turbine (3) is impinged on by the exhaust gas in pulsed fashion.

## Revendications

1. Procédé pour faire fonctionner un moteur à combustion interne (1) pour l'entraînement d'un véhicule avec une boîte de vitesses, dans lequel
- le moteur à combustion interne (1) présente un turbocompresseur à gaz d'échappement avec un compresseur (2) et une turbine (3),
- le compresseur (2) est disposé dans une conduite d'aspiration (4) et la turbine (3) dans une conduite de gaz d'échappement (5),
- un premier papillon des gaz (6) est disposé dans la conduite d'aspiration (4) en aval du compresseur (2),
- le moteur à combustion interne (1) présente une compression variable et une commande de soupapes variable,
- lorsque le moteur à combustion interne (1) fonctionne en régime de poussée ou qu'il se produit un changement de vitesse, il se produit une coupure de l'arrivée de carburant aux cylindres, une ouverture du premier papillon des gaz (6), une suppression de la compression et le réglage d'un croisement de soupapes des soupapes d'admission et d'échappement.

2. Procédé pour faire fonctionner un moteur à combustion interne (1) pour l'entraînement d'un véhicule avec une boîte de vitesses, dans lequel
- le moteur à combustion interne (1) présente un turbocompresseur à gaz d'échappement avec un compresseur (2) et une turbine (3),
- le compresseur (2) est disposé dans une conduite d'aspiration (4) et la turbine (3) dans une conduite de gaz d'échappement (5),
- un premier papillon des gaz (6) est disposé dans la conduite d'aspiration (4) en aval du compresseur (2),
- le moteur à combustion interne (1) présente une compression variable et une commande de soupapes variable,
- lorsque le moteur à combustion interne (1) fonctionne en régime de poussée ou qu'il se produit un changement de vitesse, il se produit une coupure de l'arrivée de carburant aux cylindres du moteur à combustion interne (1), une ouverture du premier papillon des gaz (6), une suppression de la compression, le réglage d'un croisement de soupapes des soupapes d'admission et d'échappement et un allumage commandé du mélange carburant-air dans les cylindres, lorsque les soupapes d'échappement sont ouvertes.

3. Procédé selon la revendication 1 ou 2, dans lequel on ouvre entièrement le premier papillon des gaz (6) et on règle la compression maximale possible et le croisement de soupapes maximal des soupapes d'admission et d'échappement.

4. Procédé selon la revendication 1, 2 ou 3, dans lequel un deuxième papillon des gaz (9) est disposé dans la conduite d'aspiration (4) en amont du compresseur (2) et on déplace le deuxième papillon des gaz (9) dans la direction de fermeture.

5. Procédé selon une revendication 1 à 4, dans lequel une conduite de raccordement d'écoulement (7) est disposée entre la conduite de gaz d'échappement (5) en aval de la turbine (3) et la conduite d'aspiration (4) en amont du compresseur (2), dans lequel une soupape (8) est disposée dans la conduite de raccordement d'écoulement (7) et la soupape (8) est ouverte.

6. Procédé selon la revendication 5, dans lequel un troisième papillon des gaz (10) est disposé dans la conduite des gaz d'échappement (5) en aval de la turbine (3) et en aval du branchement de la conduite de raccordement d'écoulement (7) et on déplace le troisième papillon des gaz (10) dans la direction de fermeture.

7. Procédé selon une revendication 1 à 6, dans lequel le moteur à combustion interne (1) présente un système de refroidissement réglable selon les besoins et on règle le système de refroidissement de façon à céder aussi peu de chaleur que possible à l'environnement.

8. Procédé selon une revendication 1 à 7, dans lequel on fournit en plus, au moyen d'une pompe à air secondaire, de l'air ambiant à la conduite des gaz d'échappement (5) en amont de la turbine (3).

9. Procédé selon une revendication 1 à 8, dans lequel on actionne les soupapes d'admission de telle manière que, pendant que l'air ambiant pénètre dans les cylindres, celles-ci accomplissent une multiplicité de courses de levée, de telle manière que l'air ambiant pénétrant dans les cylindres soit excité et que le remplissage des cylindres soit accru.

10. Procédé selon une revendication 1 à 9, dans lequel on actionne les soupapes d'échappement de telle manière que, pendant que les gaz d'échappement s'échappent des cylindres, celles-ci accomplissent une multiplicité de courses de levée, de telle manière que les gaz d'échappement s'écoulant hors des cylindres et pénétrant dans la conduite des gaz d'échappement (5) en amont de la turbine (3) soient excités et que la turbine (3) soit alimentée par à-coups avec les gaz d'échappement.
